(19) Europäisches Patentamt / European Patent Office / Office européen des brevets

(11) **EP 4 317 393 A1**

(12) **EUROPEAN PATENT APPLICATION**
published in accordance with Art. 153(4) EPC

(43) Date of publication:
**07.02.2024 Bulletin 2024/06**

(21) Application number: **22780320.2**

(22) Date of filing: **22.03.2022**

(51) International Patent Classification (IPC):
*C12C 5/02* (2006.01)   *C12C 12/04* (2006.01)
*C12G 3/05* (2019.01)   *A23L 2/38* (2021.01)

(52) Cooperative Patent Classification (CPC):
**A23L 2/38; C12C 5/02; C12C 12/04; C12G 3/05**

(86) International application number:
**PCT/JP2022/013196**

(87) International publication number:
**WO 2022/210105 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.03.2021 JP 2021055877**

(71) Applicant: **Asahi Group Holdings, Ltd.
Tokyo 130-8602 (JP)**

(72) Inventors:
• **NAKAYAMA, Wataru**
  **Moriya-shi, Ibaraki 302-0106 (JP)**
• **MATSUSHIMA, Takemasa**
  **Moriya-shi, Ibaraki 302-0106 (JP)**
• **NAKAKAWAJI, Shingo**
  **Moriya-shi, Ibaraki 302-0106 (JP)**

(74) Representative: **Müller-Boré & Partner
Patentanwälte PartG mbB
Friedenheimer Brücke 21
80639 München (DE)**

(54) **LOW-ALCOHOL BEER-TASTE BEVERAGE AND METHOD FOR PRODUCING SAME**

(57)    An object of the invention is to provide a low-alcohol beer-taste beverage having a good balance of sourness, bitterness, and sweetness, having a reduced fermented soybeans odor, and exhibiting a refreshing aftertaste. The means of solving the problem is a low-alcohol beer-taste beverage containing more than 50 mg/L and less than 250 mg/L of polyphenols, more than 30 mg/L and less than 170 mg/L of acetic acid, and a component derived from a wort fermented liquid.

EP 4 317 393 A1

**Description**

[Technical Field]

The present invention relates to a low-alcohol beer-taste beverage, and more particularly to a low-alcohol beer-taste beverage having an alcohol concentration of less than 1 v/v%. "Beer taste" means the taste and aroma reminiscent of beer. "Beer" means a beverage obtained by using as raw materials malt, hops, water and the like, and fermenting these.

[Background Art]

There is known a low-alcohol beer-taste beverage obtained by subjecting beer after fermentation to an alcohol-removing treatment to remove alcoholic components. The fermented and dealcoholization treated beer-taste beverages have a light flavor because the sweetness of the alcohol itself is removed and the aroma peculiar to beer is removed by removing the alcoholic components, and therefore they are insufficient as beverages in terms of both the aroma and the taste.

Patent Document 1 discloses a carbonated beverage having a beer-like flavor, and having an improved balance of sweetness, throat feeling of drinking and sharpness. The carbonated beverage is that prepared by adding malt extract to for flavoring, and by further adjusting the saccharide composition of a fermented and dealcoholization treated beer-taste beverage.

Patent Document 2 discloses a non-fermented beer taste beverage characterized in that the total content of polyphenols is 100 ppm or more, that the turbidity is 2 EBC° or less, and that the content of nitrogen-containing compounds having a molecular weight of 500 or more is 1000 ppm or less. The non-fermented beer-taste beverage of Patent Document 2 is a non-fermented beer-taste beverage with an increased beer-like feeling of richness by including a sufficient amount of polyphenols.

Patent Document 3 discloses a beer-flavored non-alcoholic beverage having a pH of 4.2 to 4.7, containing as main components vinegar or malt vinegar obtained by subjecting beer to acetic acid fermentation and wort, and containing substantially no alcohol. The beer-flavored non-alcoholic beverage of Patent Document 3 is a non-alcoholic beverage having a flavor similar to beer.

[Prior Art Documents]

[Patent Documents]

[Patent Document 1] JP 2003-250503 A
[Patent Document 2] JP 2019-30343 A
[Patent Document 3] JP 2018-148838 A

[Summary of Invention]

[Problems to be solved by the invention]

In the fermented and dealcoholization treated beer-taste beverages, low-molecular-weight saccharides contained in wort are consumed in the fermentation process, and the sweetness and richness are weakened. In addition, in the fermented and dealcoholization treated beer-taste beverage, alcohol and volatile aroma components are removed, and the beer-like complex taste and robust feeling of drinking are weak, and there is a problem that an odor generated when cereals are fermented, a so-called fermented soybeans odor, is easily noticeable.

The present invention solves the above problems, and an object thereof is to provide a low-alcohol beer-taste beverage having a good balance of sourness, bitterness, and sweetness, having a beer-like complex taste and robust feeling of drinking, having a reduced fermented soybeans odor, and exhibiting a refreshing aftertaste.

[Means for solving the problems]

The present invention provides a low-alcohol beer-taste beverage containing more than 50 mg/L and less than 250 mg/L of polyphenols, more than 30 mg/L and less than 170 mg/L of acetic acid, and a component derived from a wort fermented liquid.

In one embodiment, the concentration of acetic acid is 115 to 155 mg/L.

In one embodiment, the concentration of polyphenols is 95 to 215 mg/L.

In one embodiment, the ratio of acetic acid concentration B [mg/L] to polyphenol concentration A [mg/L] in the low alcohol beer-taste beverage B/A is 0.18 to 2.0.

In one embodiment, the ratio B/A is 0.60 to 1.20.

In one embodiment, the polyphenols contain at least one selected from the group consisting of malt-derived polyphenols and hop-derived polyphenols.

In one embodiment, the low-alcohol beer-taste beverage has a bitterness value of 10 to 50 BU.

In one embodiment, the low-alcohol beer-taste beverage has an apparent extract concentration of 1 to 10 w/v%.

In one embodiment, the wort fermented liquid is a wort bottom fermented liquid.

In one embodiment, the wort fermented liquid has a malt use ratio of 50 w/w% or more.

In one embodiment, the wort fermented liquid is an alcohol-removed wort fermented liquid.

Also, the present invention provides a method for producing a low-alcohol beer-taste beverage comprising: adjusting the concentration of polyphenols contained in a low-alcohol beer-taste beverage from more than 50 mg/L to less than 250 mg/L, adjusting the concentration of acetic acid contained therein from more than 30 mg/L to less than 170 mg/L, and including a component derived from a wort fermented liquid.

[Effect of the invention]

According to the present invention, it is possible to provide a low-alcohol beer-taste beverage having a good balance of sourness, bitterness, and sweetness, having a beer-like complex taste and robust feeling of drinking, having a reduced fermented soybeans odor, and exhibiting a refreshing aftertaste.

[Embodiments of the invention]

In the present specification, the term "step" is included in this term not only as an independent step but also as long as the intended purpose of the step is achieved even if it cannot be clearly distinguished from other steps. Further, when a plurality of substances corresponding to each component are present in a composition, the content of each component in the composition means the total amount of the plurality of substances present in the composition unless otherwise specified. Furthermore, for upper and lower limits of numerical ranges of the present specification, the numerical values may be optionally selected and combined. Hereinafter, embodiments of the present invention will be described in detail. However, the embodiments shown below exemplify a low-alcohol beer-taste beverage and a method for producing the same for embodying the technical idea of the present invention, and the present invention is not limited to low-alcohol beer-taste beverages, and method for producing the same shown below.

<Low-alcohol beer-taste beverage>

The low-alcohol beer-taste beverage of the present invention contains polyphenols, acetic acid, and a component derived from a wort fermented liquid.

The "low-alcohol beer-taste beverage" means a beer-taste beverage having a lower alcohol concentration than a ordinary beer-taste beverage. Low-alcohol beer-taste beverages have an alcohol concentration of 3 v/v% or less, preferably 2 v/v% or less, and more preferably less than 1 v/v%. The meaning of "low-alcohol beer-taste beverage" also includes non-alcoholic beer-taste beverages which are substantially free of alcohol (for example, alcohol concentration 0.00 v/v%). Also, the wording "alcohol" means ethanol.

<Polyphenols>

As used herein, polyphenols mean a generic term for compounds having a plurality of phenolic hydroxyl groups in one molecule. Polyphenols are found in various natural substances such as apples, malt, hops, tea, grapes, grape seeds, cacao, perilla leaves, peanuts, pine bark, and black beans, and have a characteristic bitterness or astringency. The polyphenols contained in the low-alcohol beer-taste beverage of the present invention are particularly preferably procyanidins or mixtures containing procyanidins. As used herein, procyanidins are n polymers of catechins ($n \geqq 1$, provided that n is an integer) or a generic term for them, and also include catechins with n = 1. The catechins include, but are not limited to, catechin, epicatechin, gallocatechin, and epigallocatechin. The procyanidins are not particularly limited as long as they are n polymers of catechins or mixtures thereof. In addition, natural procyanidins may be used, or synthetic procyanidins may be used.

Polyphenols contained in the low-alcohol beer-taste beverage may be those commercially available as compounds, and may be those contained in raw materials, such as hops and malt, which are used for the production of a common low-alcohol beer-taste beverage. The polyphenol concentration means the total polyphenol concentration.

The polyphenols in the low-alcohol beer-taste beverage is able to correct the fermented soybeans odor of the low-alcohol beer-taste beverage and refresh the aftertaste. In addition, the polyphenols in the low-alcohol beer-taste beverage is able to enhance the beer-like complex taste of the low-alcohol beer-taste beverage and is able to improve the robust feeling of drinking.

The polyphenols are contained in the low-alcohol beer-taste beverage in an amount such that the polyphenol concentration of the low-alcohol beer-taste beverage is more than 50 mg/L and less than 250 mg/L. If the polyphenol concentration of the low-alcohol beer-taste beverage is 50 mg/L or less, the fermented soybeans odor of the low-alcohol beer-taste beverage may not be reduced. Further, if the polyphenol concentration of the low-alcohol beer-taste beverage is 250 mg/L or more, the bitterness of the polyphenols is noticeable, and the balance of sourness, bitterness, and sweetness of the low-alcohol beer-taste beverage may be lost. The polyphenol concentration of the low-alcohol beer-taste beverage is preferably 80 to 220 mg/L, more preferably 100 to 210 mg/L, and further preferably 120 to 200 mg/L.

In one embodiment, the polyphenol concentration of the low-alcohol beer-taste beverage is preferably 85 to 230 mg/L, more preferably 95 to 215 mg/L, and further preferably 100 to 200 mg/L.

The polyphenol concentration in the low-alcohol beer-taste beverage may be measured, for example, by the colorimetric method using a reaction with trivalent iron ions ("BCOJ Beer Analysis Method, 8.19 (2004)", edited by the Beer Brewery Association).

The method for adjusting the polyphenol concentration in the low-alcohol beer-taste beverage includes, for example, a method using a raw material having a high polyphenol content. Among them, malt and hops have a high polyphenol content and are also widely used as raw materials for beer-taste beverages. Therefore, the polyphenol concentration in the low-alcohol beer-taste beverage may be increased by selecting and using the varieties having a high polyphenol content as the malt and hops used as raw materials, or by controlling the amounts of malt and hops used.

Further, roughly purified or purified polyphenols extracted from a natural substance may be added as raw materials, or synthesized polyphenols may be added as raw materials. The polyphenols extracted and purified from natural substances include polyphenols extracted from apples, malt, hops, grape seeds, black beans and the like, or catechins extracted from tea, and the like. For example, polyphenols may be eluted by bringing husk portions of the malt into warm water at 80°C or higher, and the eluted polyphenols may be added as raw materials. The non-fermented beer-taste beverage according to the present invention may contain polyphenols derived from one type of natural substance, or may contain polyphenols derived from two or more types of natural substances.

The polyphenols that may be used in the present invention are not particularly limited, but include at least one selected, for example, from the group consisting of apple-derived polyphenols, malt-derived polyphenols, hop-derived polyphenols, tea-derived polyphenols, black bean-derived polyphenols, and grape seed-derived polyphenols.

<Acetic acid>

Acetic acid is a kind of organic acid produced by yeast during the fermentation period of wort, and is a taste substance having sourness. The acetic acid contained in the low-alcohol beer-taste beverage may be one produced by fermentation of raw materials used in the production of the low-alcohol beer-taste beverage. The acetic acid contained in the low-alcohol beer-taste beverage may also be one commercially available as a sour agent or a compound and added to the low-alcohol beer-taste beverage, or may be one contained in raw materials used in the production of a common low-alcohol beer-taste beverage. The acetic acid contained in the low-alcohol beer-taste beverage may also be one produced by fermentation of raw materials used in the production of the low-alcohol beer-taste beverage.

The acetic acid in the low-alcohol beer-taste beverage is able to correct the fermented soybeans odor of the low-alcohol beer-taste beverage and is able to refresh the aftertaste. In addition, the acetic acid in the low-alcohol beer-taste beverage is able to enhance the beer-like complex taste of the low-alcohol beer-taste beverage and is able to improve the robust feeling of drinking.

Acetic acid is contained in the low-alcohol beer-taste beverage in an amount such that the acetic acid concentration of the low-alcohol beer-taste beverage is more than 30 mg/L and less than 170 mg/L. If the acetic acid concentration of the low-alcohol beer-taste beverage is 30 mg/L or less, the drool odor or the potato odor of the low-alcohol beer-taste beverage may not be reduced. Further, if the acetic acid concentration of the low-alcohol beer-taste beverage is 170 mg/L or more, sourness of acetic acid is noticeable, and the balance of sourness, bitterness, and sweetness of the low-alcohol beer-taste beverage may be lost. The acetic acid concentration of the low-alcohol beer-taste beverage is preferably 40 to 160 mg/L, more preferably 50 to 150 mg/L, and further preferably 60 to 140 mg/L.

In one embodiment, the acetic acid concentration of the low-alcohol beer-taste beverage is preferably 100 to 160 mg/L, more preferably 115 to 155 mg/L, and further preferably 120 to 150 mg/L.

The concentration of acetic acid contained in the low-alcohol beer-taste beverage may be measured, for example, by using HPLC analysis by the pH-buffered post-column electrical conductivity detection method.

The acetic acid concentration of the low-alcohol beer-taste beverage may be adjusted, for example, by controlling the type of yeast and fermentation conditions, or by adding acetic acid as required.

From the viewpoint of improving the balance of sourness, bitterness, and sweetness of the low-alcohol beer-taste beverage, the ratio of acetic acid concentration B [mg/L] to polyphenol concentration A [mg/L] B/A in the low-alcohol beer-taste beverages is, for example, 0.18 to 2.0. The ratio B/A is preferably 0.60 to 1.20, and further preferably 0.66 to 0.83.

In one embodiment, the ratio B/A is preferably 0.60 to 0.83, more preferably 0.67 to 1.20, and further preferably 0.67 to 0.83.

<Components derived from wort fermented liquid>

The low-alcohol beer-taste beverage of the present invention contains a component derived from a wort fermented liquid. The low-alcohol beer-taste beverage contains the components derived from the wort fermented liquid, and thereby the beer-like complex taste of the low-alcohol beer-taste beverage may be enhanced.

The components derived from the wort fermented liquid mean components contained in the wort fermented liquid. The wort fermented liquid means a liquid obtained by fermenting wort used in the production of ordinary beer using beer yeast.

The amounts and concentrations of the components derived from the wort fermented liquid contained in the low-alcohol beer-taste beverage are not particularly limited, and may appropriately be set according to the desired flavor.

The wort fermented liquid may be a wort top fermented liquid or a wort bottom fermented liquid. From the viewpoint of refreshing the aftertaste, the wort bottom fermented liquid is preferred. The wort top fermented liquid means a wort fermented liquid prepared by inoculating top fermenting yeast to wort, and fermenting under usual fermentation conditions, for example, at 15 to 25°C for several days. The wort bottom fermented liquid means a wort fermented liquid prepared by inoculating bottom fermenting yeast to wort, and fermenting under usual fermentation conditions, for example, at around 10°C for about one week.

The wort fermented liquid has a malt use ratio with a predetermined concentration. The malt use ratio is the ratio of the weight of malt to the weight of starchy raw material. The malt use ratio in the wort fermented liquid is, for example, 50 w/w% or more. If the malt use ratio of the wort fermented liquid contained in the low-alcohol beer-taste beverage is less than 50 w/w%, the beer-like complex taste and barley-like sweetness of the low-alcohol beer-taste beverage may be insufficient. The malt use ratio of the wort fermented liquid contained in the low-alcohol beer taste beverage is preferably 55 w/w% or more, more preferably 60 w/w% or more, and further preferably 60 to 75 w/w%.

The wort fermented liquid may be an alcohol-removed wort fermented liquid. The alcohol-removed wort fermented liquid is a wort fermented liquid obtained by removing alcohol from the liquid obtained by fermenting the wort, the wort fermented liquid being used in the production of ordinary beer. The method for removing alcohol includes a method for vaporizing alcohol, a method for removing alcohol with a reverse osmosis membrane, and the like. For the alcohol-removed wort fermented liquid, alcohol may be removed to an extent that the alcohol content of the low-alcohol beer-taste beverage in the final product becomes the desired concentration.

The low-alcohol beer-taste beverage may be one containing an alcohol-removed wort fermented liquid, or may be one in which the polyphenol concentration and the acetic acid concentration are appropriately adjusted using an alcohol-removed wort fermented liquid as a base liquid.

The apparent extract concentration of the low-alcohol beer-taste beverage is adjusted from 1 to 10 w/v%. If the apparent extract concentration of the low-alcohol beer-taste beverage is less than 1 w/v%, the beer-like complex taste and barley-like sweetness of the low-alcohol beer-taste beverage may be insufficient. In addition, if the apparent extract concentration of the low-alcohol beer-taste beverage exceeds 10 w/v%, the aftertaste of the low-alcohol beer-taste beverage may be heavy. The apparent extract concentration of the low-alcohol beer-taste beverage is preferably 2 to 9 w/v %, more preferably 2 to 8 w/v%, and further preferably 3 to 7 w/v%.

The apparent extract concentration of the low-alcohol beer-taste beverage may be measured, for example, by the method described in "BCOJ Beer Analysis Method (2004)", edited by the Beer Brewery Association. The low-alcohol beer-taste beverage may be produced, for example, by the method for producing a low-alcohol beer-taste beverage, which will be described below.

In one embodiment, the apparent extract concentration of the low-alcohol beer-taste beverage is preferably 3 to 9.5 w/v%, more preferably 5 o 9 w/v%, and further preferably 6 to 8.5 w/v%.

<Proline>

The low-alcohol beer-taste beverage of the present invention preferably contains proline. Proline is an amino acid contained in malt. The proline contained in the low-alcohol beer-taste beverage may be one commercially available as a compound or one added to the low-alcohol beer-taste beverage, and may also be one contained in a nitrogen-containing raw material to be used in the production of usual low-alcohol beer-taste beverages such as malt.

Proline in the low-alcohol beer-taste beverage is able to impart barley-like sweetness to a low-alcohol beer-taste beverage and is able to enhance its richness. The concentration of proline in the low-alcohol beer-taste beverage is, for example, 150 to 550 mg/L, preferably 200 to 500 mg/L, and more preferably 250 to 450 mg/L.

The concentration of proline in the low-alcohol beer-taste beverage may be measured, for example, by the AccqQ-Tag Ultra labeling method using an Acquity UPLC analyzer manufactured by Waters Corporation (USA). It may also be measured using an automatic amino acid analyzer JLC-500/V type manufactured by JEOL Ltd.

The proline concentration of the low-alcohol beer-taste beverage may be adjusted by controlling the amount of raw materials that have a relatively high nitrogen content and that can be assimilated by yeast, or by adding proline as required. The raw materials having a high nitrogen content include, for example, malt, soybeans, yeast extracts, peas, and ungerminated cereals.

<Bitterness value>

The low-alcohol beer-taste beverage preferably has a predetermined bitterness value (unit: BU). The low-alcohol beer-taste beverage has a predetermined bitterness value, and thereby the aftertaste of the low-alcohol beer-taste beverage is more refreshing. Here, the bitterness value is an index of bitterness given by a group of hop-derived substances containing isohumulone as a main component.

The bitterness value of the low-alcohol beer-taste beverage is preferably 10 to 50 BU. If the bitterness value of the low-alcohol beer-taste beverage is less than 10 BU, the aftertaste of the low-alcohol beer-taste beverage may be heavy. If the bitterness value of the low-alcohol beer-taste beverage exceeds 50 BU, the bitterness of the low-alcohol beer-taste beverage is noticeable, and the beer-like complex taste of the low-alcohol beer-taste beverage may be insufficient. The bitterness value of the low-alcohol beer taste beverage is more preferably 10 to 45 BU, further preferably 15 to 40 BU, and particularly preferably 20 to 35 BU.

The bitterness value may be measured, for example, by the method described in "BCOJ Beer Analysis Method, 8.15 (2004)", edited by the Beer Brewery Association.

The bitterness value of the low-alcohol beer-taste beverages may be adjusted by controlling the varieties of raw materials containing a bitterness substance (for example, hops, and the like), the amounts thereof used, the timing of the raw materials added, and the like, or by appropriately adding the bitterness substance. Isolated iso-$\alpha$ acids may be used as the bitter substance. The iso-$\alpha$ acids are contained in hops, and they may also be employed as hops or a hop extract. The hops or hop extract means hop leaves, a ground product thereof, an extraction liquid obtained by extracting these with water or boiling water, a concentrate and a dried product of the extraction liquid.

<Method for producing low-alcohol beer-taste beverage>

The method for producing a low-alcohol beer-taste beverage may include a step of adjusting the concentration of polyphenols contained in the low-alcohol beer-taste beverage to a predetermined concentration, a step of adjusting the concentration of acetic acid contained in the low-alcohol beer-taste beverage to a predetermined concentration, and a step of including a component derived from a wort fermented liquid in the low-alcohol beer-taste beverage. In addition to these steps, a conventional method for producing a low-alcohol beer-taste beverage may be used.

The method for producing a low-alcohol beer-taste beverage in the present specification may include a polyphenol concentration adjustment step of adjusting the polyphenol concentration in the low-alcohol beer-taste beverage to a predetermined concentration; an acetic acid concentration adjustment step of adjusting the acetic acid concentration in the low-alcohol beer-taste beverage to a predetermined concentration; and a wort fermented liquid-derived component addition step of including components derived from a wort fermented liquid in the low-alcohol beer-taste beverage. The order of the polyphenol concentration adjustment step, the acetic acid concentration adjustment step, and the wort fermented liquid-derived component addition step is not particularly limited, and may be performed in any order.

The polyphenol concentration adjustment step may include adjusting the polyphenol concentration in the low-alcohol beer-taste beverage to the above-mentioned range.

The acetic acid concentration adjustment step may include adjusting the acetic acid concentration in the low-alcohol beer-taste beverage to the above-mentioned range.

The wort fermented liquid-derived component addition step may include including components derived from a wort fermented liquid in the low-alcohol beer-taste beverage. At this stage, the wort fermented liquid itself may be included in the low-alcohol beer-taste beverage, or a low-alcohol beer-taste beverage may be prepared based on the wort fermented liquid.

Further, the method for producing a low-alcohol beer-taste beverage may include a fermentation step, an alcohol-removing step, a proline concentration adjustment step, a bitterness value adjustment step, or an apparent extract concentration adjustment step.

The proline concentration adjustment step may include adjusting the concentration of proline in the low-alcohol beer-taste beverage to the above-mentioned range.

The bitterness value adjustment step may include adjusting the bitterness value of the low-alcohol beer-taste beverage to the above-mentioned range.

The apparent extract concentration adjustment step may include adjusting the apparent extract concentration of the low-alcohol beer-taste beverage to the above-mentioned range.

The fermentation step may be any step so long as it is a step of adding yeast to wort and performing fermentation, and necessary conditions such as fermentation temperature, and fermentation period may appropriately be adjusted. For example, it may be fermented under the conditions of 8 to 25°C for 1 week to 10 days, which are the fermentation conditions for the production of ordinary beer or low-malt beer. Further, the temperature (increasing or decreasing the temperature) or pressure of the fermented liquid may be changed in the middle of the fermentation step.

The alcohol-removing step means a step of removing alcohol from a beer-taste beverage, a wort fermented liquid, a beer composition, and the like to an extent that the alcohol content of the low-alcohol beer-taste beverage in the final product becomes the desired concentration. The method for removing alcohol includes a method for vaporizing alcohol, a method for removing alcohol with a reverse osmosis membrane, and the like. A method for vaporizing alcohol is preferred because the alcohol can be removed in a relatively short time.

The method for producing a low-alcohol beer-taste beverage may further include a step of adding caramel coloring and the like, a boiling step, a pH adjustment step, a filtration step, a flavor adjustment step, a step of dissolving carbon dioxide gas, and the like using a conventional apparatus and the like.

The method for producing a low-alcohol beer-taste beverage may further include a step of adding dietary fiber, soybean peptides, carbonic acid, extracts, flavorings, sour agents, sweetening agents, bittering agents, coloring agents, antioxidants, pH adjusting agents, various nutritional components and the like.

The present invention will be described in more detail with reference to the following examples, but the present invention is not limited to these.

[Examples]

<Analysis method for low-alcohol beer-taste beverages>

[Apparent extract]

The apparent extract concentration was obtained by the following formula (1) according to the method described in "BCOJ Beer Analysis Method (2004)", edited by the Beer Brewery Association.

$$\text{Es end} = -460.234 + 662.649 \times \text{SGEA} - 202.414 \times \text{SGEA2} \quad (1)$$

In the formula, "Es end" is the apparent extract concentration, and
"SGEA" is the specific gravity of degassed low-alcohol beer-taste beverages.

[Bitterness value]

The bitterness value was measured according to "BCOJ Beer Analysis Method, 8.15 (2004)", edited by the Beer Brewery Association. Specifically, an acid was added to a sample, followed by extraction with isooctane and centrifugal treatment to obtain an isooctane layer. Absorbance of the isooctane layer at 275 nm using pure isooctane as control was measured. The absorbance was multiplied by the constant (50) to obtain the bitterness value (BU).

[Acetic acid concentration]

Acetic acid concentration was measured with HPLC analysis by a pH buffered post-column electrical conductivity detection method. A sample was filtered through a 0.45 um filter and then subjected to measurement. An organic acid analysis system (manufactured by Shimadzu Corporation) was used. RSpak KC 811 (manufactured by Shodex Corporation) as a column, 5 mmol/L p-toluenesulfonic acid as a mobile phase, and a flow rate of 0.8 mL/min were used to separate the organic acids. An electrical conductivity detector (CDD-10 Avp, manufactured by Shimadzu Corporation) was used as a detector. In order for quantification, a standard substance was added to the sample, and a calibration curve was prepared.

[Polyphenol concentration]

The polyphenol concentration was measured by a colorimetric method based on the reaction between ferric on ions and polyphenols ("BCOJ Beer Analysis Method, 8.19 (2004)", edited by the Beer Brewery Association). Specifically, 10 mL of beer-taste beverage after gas removal and 8 mL of CMC/EDTA reagent (i.e., 1% solution of sodium CMD (carboxymethyl cellulose) salt containing 0.2% of EDTA) were mixed. 0.5 mL of a trivalent iron reagent (3.5 g of iron (III) ammonium citrate dissolved in 100 mL of distilled water) was added thereto, and sufficiently mixed. Then, 0.5 mL of an ammonia reagent (a solution obtained by diluting concentrated ammonia water (d = 0.92 g/mL) with twice the volume of distilled water) was added thereto, and mixed thoroughly. Thereafter, the mixture was adjusted to 25mL with distilled water and sufficiently mixed again. After leaving the mixed liquid to stand for 10 minutes, the absorbance at 600 nm was measured using a cell with a cell width of 10 mm. As a blank for the absorbance measurement, a blank solution to which no trivalent iron reagent was added was used. Specifically, the blank was prepared as follows.

10 mL of beer-taste beverage after gas removal and 8 mL of CMC/EDTA reagent were mixed. 0.5 mL of the ammonia reagent was added, and mixed thoroughly. Then, the mixture was adjusted to 25 mL with distilled water and sufficiently mixed again. The obtained mixed liquid was left to stand for 10 minutes. The polyphenol concentration of each beer-taste beverage was determined from the absorbance by the following formula.

$$P = A \times 820$$

where "P" is the polyphenol concentration (mg/L), and "A" is the absorbance at 600 nm.

<Example 1>

Crushed malt was put in a preparation kettle so that the malt ratio was 20%, further water and corn starch were put therein, gelatinized at 70°C, and liquefied at 100°C.

Next, crushed malt, an enzyme and warm water were put in a preparation tank, protein was decomposed at around 55°C, and then the liquid was transferred from the preparation kettle to the preparation tank, and saccharifying was performed at a temperature in the range of 60°C to 76°C. This saccharified liquid was filtered with a lauter that was a filter tank, then transferred to a boiling kettle, bitter hops were added, and boiled for 60 minutes. After boiling, warm water equivalent to the evaporated component was added, hot trub was removed in a whirlpool tank, followed by cooling to 10°C using a plate cooler to obtain cold wort. Beer yeast was added to this wort and fermented it at around 10°C for 7 days, after which the beer yeast was removed. The tank was changed, the resulting wort was matured for 7 days, then cooled to around -1°C and stabilized for 14 days. After dilution by adding gas-removed water, filtration was conducted using diatomaceous earth to obtain a wort fermented liquid. Next, the obtained wort fermented liquid was sprayed into a gas-removing tank under a reduced pressure of about 90 mbar to remove carbon dioxide, followed by heating to about 50°C using a plate cooler. Thereafter, it was brought into contact with water vapor heated to around 50°C in a column at a reduced pressure of around 90 mbar to adsorb volatile components to the water vapor so that alcohol and volatile components are removed, thereby obtaining an alcohol-removed wort fermented liquid having an alcohol concentration of 0.02% (v/v). The respective raw materials were added to the obtained wort fermented liquid so that the concentrations of the liquid sugar, caramel, phosphoric acid, and flavoring were 10 g/L, 0.3 g/L, 0.7 g/L, and 1.0 g/L, respectively, and dextrin was added so that the apparent extract concentration was 8 w/v%. Furthermore, the acetic acid concentration was adjusted to 30 mg/L by adding acetic acid to obtain a low-alcohol beer-taste beverage of Example 1.

<Examples 2 to 4>

The acetic acid concentrations were adjusted to 120 mg/L, 150 mg/L, and 170 mg/L, respectively, by adding acetic acid to the low-alcohol beer-taste beverage of Example 1, to obtain low-alcohol beer-taste beverages of Examples 2 to 4.

<Example 5>

An alcohol-removed wort fermented liquid was prepared in the same manner as in Example 1 except that hops were not used. The respective raw materials were added to the obtained alcohol-removed wort fermented liquid so that the concentrations of the saccharified liquid, caramel, phosphoric acid, and flavoring were 10 g/L, 0.3 g/L, 0.7 g/L, and 1.0 g/L, respectively, and dextrin was added so that the apparent extract concentration was 8 w/v%. Furthermore, the acetic acid concentration was adjusted to 120 mg/L by adding acetic acid, and the polyphenol concentration was adjusted to 50 mg/L by adding an isomerized hop extract (manufactured by John I. Haas, Inc.) to obtain a low-alcohol beer-taste beverage of Example 5.

<Examples 6 to 9>

The polyphenol concentrations were adjusted to 100 mg/L, 150 mg/L, 200 mg/L, and 250 mg/L, respectively, by adding isomerized hop extracts to the low-alcohol beer-taste beverage of Example 5 to obtain low-alcohol beer-taste beverages of Examples 6 to 9.

<Sensory Evaluation>

Next, the sensory evaluation of the produced low-alcohol beer-taste beverage was performed. The evaluation items were "balance of sourness, bitterness, and sweetness", "beer-like complex taste", "robust feeling of drinking", "refreshness of aftertaste", and "weakness of fermented soybeans odor".
Five panelists specialized in beer-taste beverages performed sensory evaluations on Examples 1 to 9. The evaluation criteria were as follows. A preliminary test was conducted on the panelists, and it was confirmed that there was no significant difference in the scores among the panelists. The average value of evaluations of the respective panelists were used as the evaluation results of Examples 1 to 9. The evaluation results are shown in Table 1.
The "balance of sourness, bitterness, and sweetness" was evaluated on a 5-levels scale in which the score of Example 1 was set at 2 points, and the score of the best sample was graded as 5 points.
The "beer-like complex taste" was evaluated on a 5-levels scale in which the score of Example 1 was set at 2 points, and the score of the best sample was graded as 5 points.
The "robust feeling of drinking" was evaluated on a 5-levels scale in which the score of Example 1 was set at 2 points, and the score of the best sample was graded as 5 points.
The "refreshness of aftertaste" was evaluated on a 5-levels scale in which the score of Example 1 was set at 4 points, and the score of the best sample was graded as 5 points.
The "weakness of fermented soybeans odor" was evaluated on a 5-levels scale in which the score of Example 1 was set at 2 points, and the score of the best sample was graded as 5 points.
For all evaluation items, if the average of scores was 3.5 or higher, beer-like flavor was recognized; the comprehensive evaluation was "A: good", and if the above-mentioned score criteria were not met, beer-like flavor was not recognized; the comprehensive evaluation was "B: inferior".

[Table 1]

| | Examples | | | | | | | | |
|---|---|---|---|---|---|---|---|---|---|
| | 1 | 2 | 3 | 4 | 5 | 6 | 7 | 8 | 9 |
| Apparent extract (w/v%) | 8 | 8 | 8 | 8 | 8 | 8 | 8 | 8 | 8 |
| Bitterness value (BU) | 21 | 21 | 21 | 21 | 21 | 21 | 21 | 21 | 21 |
| Acetic acid B (mg/L) | 30 | 120 | 150 | 170 | 120 | 120 | 120 | 120 | 120 |
| Polyphenols A (mg/L) | 180 | 180 | 180 | 180 | 50 | 100 | 150 | 200 | 250 |
| Ratio B/A | 0.1 7 | 0.67 | 0.83 | 0.94 | 2.4 | 1.2 | 0.80 | 0.60 | 0.40 |
| Balance of sourness, bitterness, and sweetness | 2.0 | 4.0 | 4.0 | 2.0 | 2.0 | 3.4 | 3.8 | 3.8 | 2.4 |
| Beer-like complex taste | 2.0 | 4.0 | 4.0 | 2.0 | 2.0 | 4.8 | 4.8 | 4.8 | 3.2 |
| Robust feeling of drinking | 2.0 | 4.0 | 4.0 | 2.0 | 2.0 | 4.0 | 3.8 | 3.8 | 4.0 |
| Refreshness of aftertaste | 4.0 | 4.0 | 4.0 | 4.0 | 3.4 | 3.6 | 3.8 | 4.8 | 3.4 |
| Weakness of fermented soybeans odor | 2.0 | 4.0 | 4.0 | 2.0 | 2.0 | 3.6 | 3.6 | 4.2 | 4.2 |
| Comprehensive evaluation | B | A | A | B | B | A | A | A | B |

From Table 1, it can be seen that, by controlling the acetic acid concentration of the low-alcohol beer-taste beverage from 120 to 150 mg/L, the low-alcohol beer-taste beverage has an excellent balance of sourness, bitterness, and sweetness, has a beer-like complex taste and robust feeling of drinking, has a reduced fermented soybeans odor, and exhibits a refreshing aftertaste. Further, it can be seen that, by controlling the polyphenol concentration of the low-alcohol beer-taste beverage from 100 to 200 mg/L, the low-alcohol beer-taste beverage has an excellent balance of sourness, bitterness, and sweetness, has a beer-like complex taste and robust feeling of drinking, has a reduced fermented soybeans odor, and exhibits a refreshing aftertaste.

**Claims**

1. A low-alcohol beer-taste beverage containing more than 50 mg/L and less than 250 mg/L of polyphenols, more than 30 mg/L and less than 170 mg/L of acetic acid, and a component derived from a wort fermented liquid.

2. The low-alcohol beer-taste beverage according to claim 1, wherein the concentration of acetic acid is 115 to 155 mg/L.

3. The low-alcohol beer-taste beverage according to claim 1 or 2, wherein the concentration of polyphenol is 95 to 215 mg/L.

4. The low-alcohol beer-taste according to any one of claims 1 to 3, wherein the ratio of acetic acid concentration B [mg/L] to polyphenol concentration A [mg/L] in the low-alcohol beer-taste beverage B/A is 0.18 to 2.0.

5. The low-alcohol beer-taste beverage according to any one of claims 1 to 4, wherein the ratio B/A is 0.60 to 1.20.

6. The low-alcohol beer-taste beverage according to claim 1 or 2, wherein the polyphenols contain at least one selected from the group consisting of malt-derived polyphenols and hop-derived polyphenols.

7. The low-alcohol beer-taste beverage according to any one of claims 1 to 3, having a bitterness value of 10 to 50 BU.

8. The low-alcohol beer-taste beverage according to any one of claims 1 to 4, having an apparent extract concentration of 1 to 10 w/v%.

9. The low-alcohol beer-taste beverage according to any one of claims 1 to 5, wherein the wort fermented liquid is a wort bottom fermented liquid.

10. The low-alcohol beer-taste beverage according to any one of claims 1 to 6, wherein the wort fermented liquid has a malt use ratio of 50 w/w% or more.

11. The low-alcohol beer-taste beverage according to any one of claims 1 to 7, wherein the wort fermented liquid is an alcohol-removed wort fermented liquid.

12. A method for producing a low-alcohol beer-taste beverage comprising: adjusting the concentration of polyphenols contained in a low-alcohol beer-taste beverage from more than 50 mg/L to less than 250 mg/L, adjusting the concentration of acetic acid contained therein from more than 30 mg/L to less than 170 mg/L, and including a component derived from a wort fermented liquid.

## INTERNATIONAL SEARCH REPORT

| International application No. |
| --- |
| **PCT/JP2022/013196** |

**A. CLASSIFICATION OF SUBJECT MATTER**

*C12C 5/02*(2006.01)i; *C12C 12/04*(2006.01)i; *C12G 3/05*(2019.01)i; *A23L 2/38*(2021.01)i
FI:   C12C12/04; C12C5/02; C12G3/05; A23L2/38 J

According to International Patent Classification (IPC) or to both national classification and IPC

**B. FIELDS SEARCHED**

Minimum documentation searched (classification system followed by classification symbols)

C12C1/00-13/10; C12G3/00-3/08; A23L2/00-84

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY/MEDLINE/EMBASE/BIOSIS/FSTA/AGRICOLA (STN)

**C. DOCUMENTS CONSIDERED TO BE RELEVANT**

| Category* | Citation of document, with indication, where appropriate, of the relevant passages | Relevant to claim No. |
| --- | --- | --- |
| X | BOSSAERT, Sofie, et al., Description of the temporal dynamics in microbial community composition and beer chemistry in sour beer production via barrel ageing of finished beers, International Journal of Food Microbiology, 30 December 2020, vol. 339, 109030, pp. 1-18 in particular, p. 2, right column, lie 41 to p. 3, left column, line 55, fig. 6, sections of 'C Acetic acid' and ' ○ Total polyphenols' | 1-7, 10, 12 |
| A | in particular, p. 2, right column, lie 41 to p. 3, left column, line 55, fig. 6, sections of 'C Acetic acid' and ' ○ Total polyphenols' | 8-9, 11 |
| A | JP 4-287677 A (KIRIN BREWERY CO., LTD.) 13 October 1992 (1992-10-13) claims, paragraph [0004], tables 1, 2 | 1-12 |
| A | JP 2015-122970 A (KAO CORP.) 06 July 2015 (2015-07-06) claims 1, 9, example 23 | 1-12 |

☐ Further documents are listed in the continuation of Box C.    ☑ See patent family annex.

| | |
| --- | --- |
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
| --- | --- |
| **17 May 2022** | **31 May 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/013196**

| Patent document cited in search report | | | Publication date (day/month/year) | Patent family member(s) | Publication date (day/month/year) |
|---|---|---|---|---|---|
| JP | 4-287677 | A | 13 October 1992 | (Family: none) | |
| JP | 2015-122970 | A | 06 July 2015 | (Family: none) | |

Form PCT/ISA/210 (patent family annex) (January 2015)

**REFERENCES CITED IN THE DESCRIPTION**

**Patent documents cited in the description**

- JP 2003250503 A
- JP 2019030343 A

- JP 2018148838 A

**Non-patent literature cited in the description**

- BCOJ Beer Analysis Method, 8.19. 2004
- *BCOJ Beer Analysis Method,* 2004

- *BCOJ Beer Analysis Method, 8.15,* 2004
- *BCOJ Beer Analysis Method, 8.19,* 2004